# EUROPEAN PATENT SPECIFICATION

(11) **EP 1 616 673 B1**
(45) Date of publication and mention of the grant of the patent: **23.01.2008**
(21) Application number: 05014850.1
(22) Date of filing: 08.07.2005
(51) Int. Cl.: B25J 9/10, B25J 15/00

(54) **Joint mechanism with two actuators for robot hand and the like**
Gelenkmechanismus mit zwei Aktuatoren für eine Roboterhand und dergleichen
Mécanisme d'articulation avec deux actionneurs pour une main de robot et similaire

(30) Priority: 16.07.2004 JP 2004209451
(43) Date of publication of application: 18.01.2006
(73) Proprietor: HARMONIC DRIVE SYSTEMS INC., Shinagawa-ku, Tokyo 140-0013 (JP)
(72) Inventor: Koyama, Junji c/o Harmonic Drive Systems Inc., Minamiazumi-gun Nagano-ken, 399-8305 (JP); Kameda, Hiroshi c/o Harmonic Drive Systems Inc., Minamiazumi-gun Nagano-ken, 399-8305 (JP); Kamata, Toshiaki c/o Harmonic Drive Systems Inc., Minamiazumi-gun Nagano-ken, 399-8305 (JP)
(74) Representative: Klunker . Schmitt-Nilson . Hirsch

(56) References cited:
- EP-A- 0 355 866
- US-B1- 6 658 962
- PATENT ABSTRACTS OF JAPAN vol. 2000, no. 17, 5 June 2001 (2001-06-05) -& JP 01 027880 A (TOSHIBA CORP), 30 January 1989 (1989-01-30)

## Description

### 1. Field of the Invention

The present invention relates to a joint mechanism used in a finger unit and the like of a robot hand that can accurately grasp airborne objects or the like at high speeds, and particularly relates to a joint mechanism wherein a drive torque of a joint axle can be increased without increasing a dimension in a direction orthogonal to the joint axle.

### 2. Description of the Related Art

Finger units used in robot hands commonly have articulated structures, and actuators that are small, lightweight, have high torque, and can drive finger joints with a high degree of precision are required in order to enable these articulated joint units to quickly and accurately grasp, hold, and throw objects. Configuring such an actuator requires a motor capable of instantaneously generating a maximum torque at high speeds within dimensions of the fingers, a reduction gear with minimal backlash at a high reduction ratio, and a precision encoder. However, such actuators are not commercially available, nor are related products that would serve as structural elements to satisfy such specifications. Specifically, the instantaneous maximum output torque of a servomotor is insufficient, a reduction gear has a large backlash of no less than 1° in an output axle even if it has multistage planetary gears, and no products that are sufficiently small and lightweight and have a high enough resolution for an encoder are available.

Also, in order to convert a rotation outputted from a rotational output axle of an actuator in an articulated finger unit into rotational movement of a joint axle orthogonal thereto, combinations of screws and locks/pinions, crank mechanisms, worm gears, wires, sheaves, and the like have been used in the prior art. However, all of these are inconvenient in that they increase the dimensions and mass of the joints, cause the speed of switching between operations to be insufficient, and bring about other problems. Using a regular bevel gear also has problems with the backlash and with smooth rotation.

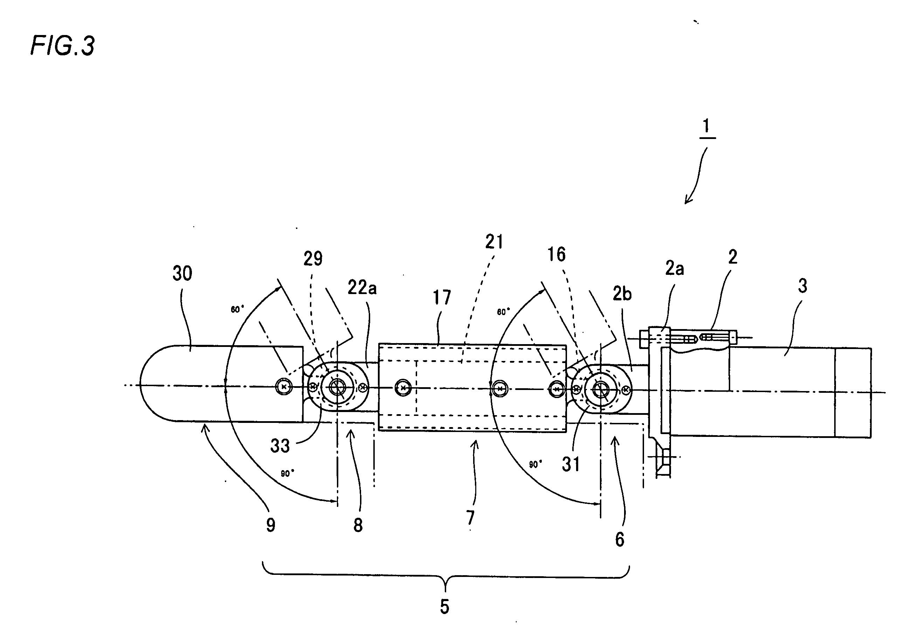

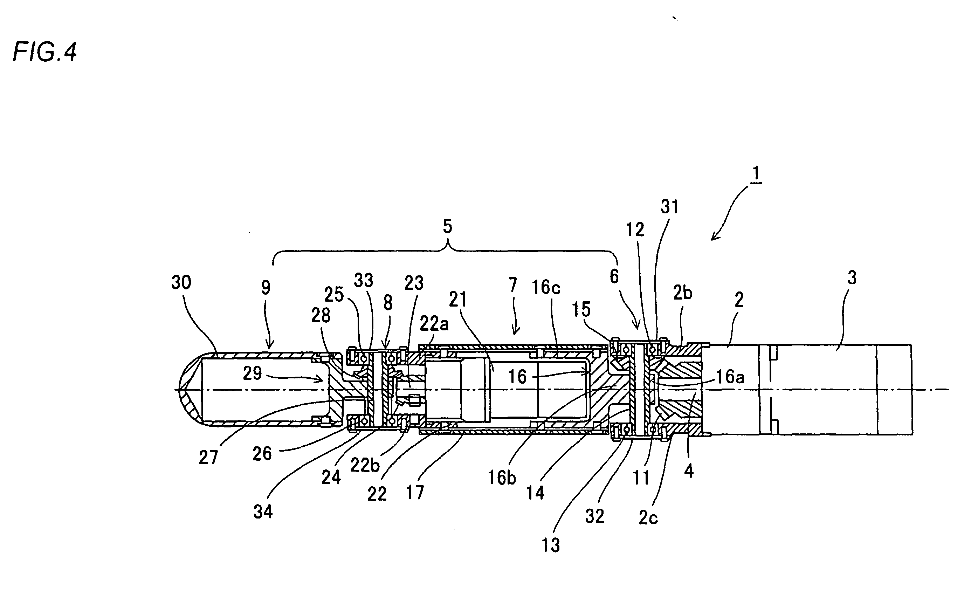

In JP-A 2004-122339, the inventors et al. have proposed an articulated finger unit for a robot hand aimed at resolving such problems. FIGS. 3 and 4 are a plan view and a cross-sectional view showing the articulated finger unit disclosed in this literature. As shown in these diagrams, an articulated finger unit 1 has a mounting flange 2, an actuator 3 mounted on this mounting flange 2, and an articulated finger main body unit 5 connected to a rotational output axle 4 of the actuator 3. The finger main body unit 5 is configured from a finger-base joint part 6 connected to a front end of the rotational output axle 4 of the actuator 3, a finger base part 7 connected to a front end of the finger-base joint part 6, a fingertip joint part 8 connected to a distal end of the finger base part 7, and a fingertip part 9 connected to the front end of the fingertip joint part 8.

The pillar-shaped actuator 3 faces forward while a front end section thereof is fixed in place in a circular opening frame 2a of the mounting flange 2, and the rotational output axle 4 protrudes forward from a front end surface thereof through the circular opening frame 2a. A drive bevel gear 11 is coaxially fixed in place on a distal end of the rotational output axle 4.

A pair of finger-base side bearing housings 2b, 2c extend parallel to each other from top and bottom ends of a front surface of the mounting flange 2 through top and bottom positions of the drive bevel gear 11. A top ball bearing 12 and a bottom ball bearing 13 are respectively mounted so as to be in coaxial positions on distal ends of these finger-base side bearing housings 2b, 2c that protrude farther forward than the drive bevel gear 11. These ball bearings 12 and 13 allow a finger-base side joint axle 14 to be supported in a direction orthogonal, or perpendicular in the present example, to an axial direction of the rotational output axle 4, with top and bottom ends in a rotatable state.

A driven bevel gear 15 is coaxially fixed in place on an outer peripheral surface at the top of the joint axle 14 in the axial direction, and this driven bevel gear 15 meshes with the drive bevel gear 11. An annular boss 16a of a connecting member 16 is fixed in place in the middle of the axial direction of the joint axle 14. The connecting member 16 has the annular boss 16a, a neck portion 16b that extends forward from the annular boss 16a, and a fork portion 16c that extends forward in a shape of a U from a distal end of the neck portion 16b. A cylindrical base side cover 17 is connected coaxially to the fork portion 16c.

Thus, the finger-base joint part 6 linked to the front end of the rotational output axle 4 of the actuator 3 is configured from the top and bottom finger-base side bearing housings 2b, 2c formed on the mounting flange 2, the top and bottom ball bearings 12 and 13, the finger-base side joint axle 14, the finger-base side driven bevel gear 15, and the finger-base side connecting member 16. Also, the finger base part 7 is formed from the cylindrical base side cover 17 connected to the fork portion 16c of the finger-base side connecting member 16.

Next, the fingertip joint part 8 and the fingertip part 9 connected to the distal end of the finger base part 7 have the same structure as the finger-base side joint part 6 and the finger base part 7. Specifically, a second actuator 21 is coaxially mounted in the hollow part of the base side cover 17, and a front end of this actuator 21 is rotatably supported by an annular flange 22 mounted in the same manner in the hollow part of the base side cover 17. An outer peripheral surface of this annular flange 22 is fixed onto an inner peripheral surface of the base side cover 17.

A rotational output axle 23 of the actuator 21 protrudes coaxially forward through a hollow part of the annular flange 22, and a fingertip side drive bevel gear 24 is coaxially fixed in place on a distal end thereof. A pair of fingertip side bearing housings 22a, 22b extend parallel to each other from top and bottom ends of a front surface of the annular flange 22 through the top and bottom of the drive bevel gear 24. A top ball bearing 25 and a bottom ball bearing 26 are mounted on distal ends of the fingertip side bearing housings 22a, 22b that protrude farther forward than the drive bevel gear 24 so as to be in coaxial positions. These ball bearings 25 and 26 allow a fingertip side joint axle 27 to be supported in a direction orthogonal, or perpendicular in the present example, to an axial direction of the rotational output axle 23, with top and bottom ends in a rotatable state.

A driven bevel gear 28 is coaxially fixed in place on an outer peripheral surface at a top of the joint axle 27 in an axial direction, and this driven bevel gear 28 meshes with the drive bevel gear 24. An annular boss 29a of a fingertip side connecting member 29 is fixed in place in the middle of an axial direction of the driven bevel gear 28. The connecting member 29 has the annular boss 29a, a neck portion 29b that extends forward from the annular boss 29a, and a fork portion 29c that extends forward in a shape of a U from a distal end of the neck portion 29b. A cylindrical fingertip side cover 30 whose distal end is closed off in a semispherical shape is coaxially connected to the fork portion 29c.

In the articulated finger unit 1, the rotation of the rotational output axle 4 is converted to rotational movement in the joint axle 14 via the pair of bevel gears 11 and 15, and the connecting member 16 fixed in place at one end to the joint axle 14 revolves through an angle of 90° or more to the left and right around the joint axle 14. The joint parts 6 and 8 can be controlled to bend by an angle of 90° or more forwards and backwards or to the left and right, and a lightweight, fast and highly precise artificial finger that is capable of various operations can be achieved.

The actuators 3 and 21 have a servomotor with a high speed, high maximum torque, and short time rating based on a high-density winding and a high-density component arrangement; a wave gear drive unit with a high reduction ratio (for example, 1/50 to 1/100), small dimensions, high torque, and small backlash; and a small, lightweight, and highly responsive encoder with a high resolution. Also, oilless bevel gears with minimal backlash are used as the bevel gears 11, 15, 24, and 28. Such bevel gears are subjected to a surface hardening treatment after teeth are cut, a lapping treatment is performed using a high-precision bevel gear lapping machine in a backlash-free state, a tooth surface is impregnated with a solid lubricant, and the gears are made capable of backlash-free movement without lubrication.

This backlash-free movement structure of the bevel gears 11 and 15 and the bevel gears 24 and 28 used in the joint parts is comprised of spring plates. For example, in the finger-base side joint 6, spring plates 31 and 32 for applying an axial thrust that limits an amount of axial shift in the joint axle 14 in a direction of a conical center of the bevel gears are mounted on a top surface of the top ball bearing 12 and a bottom surface of the bottom ball bearing 13 on which the top and bottom ends of the joint axle 14 are rotatably supported. Spring plates 33 and 34 that function similarly are mounted in the same manner in the fingertip side joint part 8.

A further joint mechanism is known from US-A-6 658 962 which comprises two actuators mounted on a supporting member and acting in parallel along the centerline of a joint axle by means of two drive bevel gears meshing with two driven, bevel gears.

### SUMMARY OF THE INVENTION

In a joint mechanism for a robot hand and the like according to JP-A-2004 122 339, it is common to use a higher size (model number) for a motor and a reduction gear constituting an actuator as a method for enhancing torque of joint axles. However, a motor and a reduction gear of a higher model number normally also have larger outside diameter dimensions. Therefore, the dimensions of the joint mechanism itself will inevitably be larger.

Increasing the dimensions of the joint mechanism is not preferred because a diameter or thickness of the finger units of the robot hand incorporating these mechanisms will increase. Particularly, sometimes there is no extra space in a horizontal width direction orthogonal to the joint axle in the joint mechanism. In this case, even if there is extra installation space in a vertical direction (axial direction) of the joint axle, a large actuator cannot be used because of restrictions on the installation space in the width direction, and it is difficult to obtain a required drive torque.

Moreover, in the joint mechanism with two actuators disclosed in US-A-6 658 962, additional space is required by the force transmission mechanism.

A main object of the present invention is to provide a joint mechanism for a robot hand and the like wherein a drive torque of a joint axle can be increased, particularly without accompanying increase in dimensions in a direction orthogonal to the joint axle.

### MEANS OF ACHIEVING OBJECTIVES

In order to achieve the above and other objects, a joint mechanism for a robot hand and the like in accordance with the present invention has a joint axle, a supporting member for rotatably supporting the joint axle around a centerline thereof, a revolving member connected to the joint axle and allowed to revolve around the centerline along with the rotation of the joint axle, at least a first and a second actuators mounted on the supporting member, at least a first and a second driven bevel gears fixedly mounted on the joint axle in coaxial manner, a first drive bevel gear that is coaxially connected to a rotational output axle of the first actuator and that meshes with the first driven bevel gear, and a second drive bevel gear that is coaxially connected to a rotational output axle of the second actuator and that meshes with the second driven bevel gear; wherein the first and second actuators are disposed in parallel with a direction of the centerline of the joint axle.

In a typical configuration in the present invention, the supporting member has a mounting frame for mounting the first and second actuators, and a pair of support arms extending parallel to each other from both ends of the mounting frame. Also, distal ends of these support arms rotatably support both end sections of the joint axle via bearings, and the first and second driven bevel gears are fixedly mounted at locations inside of the each bearing in the joint axle. Furthermore, the revolving member comprises a connecting arm connected to a center section of the joint axle between the bearings.

In the joint structure for the robot hand and the like according to the present invention, the joint axle is rotatably driven using bevel gears, a plurality of actuators are disposed in parallel along the centerline direction of the joint axle, and rotational forces of these actuators can be transmitted to the joint axle via a gear train comprised of bevel gears.

Therefore, the drive torque of the joint axle can be increased by driving these actuators simultaneously. Also, since the plurality of actuators are disposed in parallel with the direction of the joint axle, the dimension in the direction orthogonal to the joint axle does not increase even though the dimension in the direction of the joint axle increases. This approach is therefore extremely useful when the dimension of the joint mechanism cannot be increased in the width direction thereof.

### BRIEF DESCRIPTION OF THE DRAWINGS

FIG. 1 is a plan view, front view, and side view as seen from the distal end of a joint mechanism according to the present invention;
FIG. 2 is a cross-sectional view showing a portion that is cut along a line a-a in FIG. 1;
FIG. 3 is a plan view showing an example of an articulated finger unit; and
FIG. 4 is a longitudinal cross-sectional view of the articulated finger unit in FIG. 3.

### DESCRIPTION OF THE PREFERRED EMBODIMENTS

Examples of a joint mechanism for a robot hand and the like according to the present invention will be described with reference to the drawings.

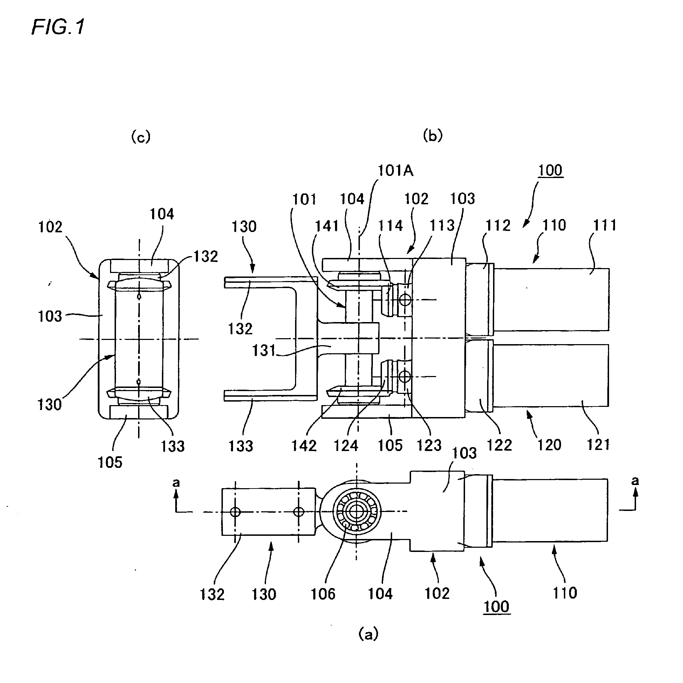

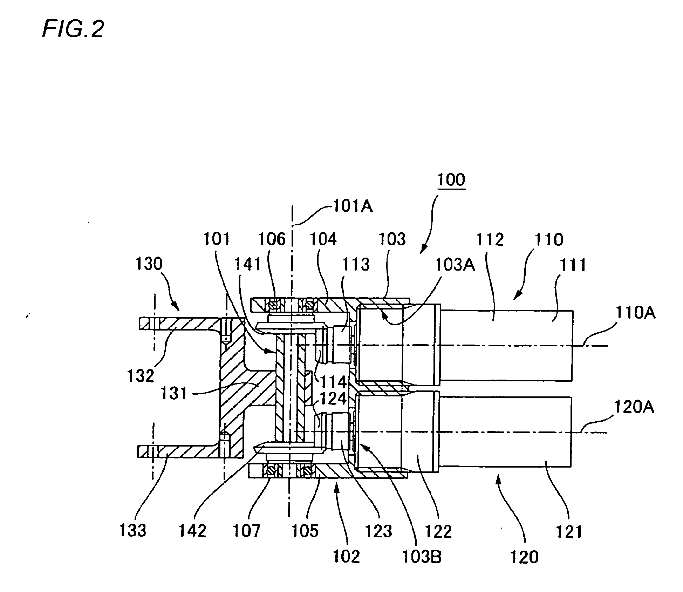

FIG. 1 is a plan view, front view, and side view as seen from the distal end showing the joint mechanism of a finger unit in a robot hand, and FIG. 2 is a cross-sectional view of a portion that is cut along the line a-a in FIG. 1.

A joint mechanism 100 of the present example has a cylindrical vertically extending perpendicular joint axle 101, and the perpendicular joint axle 101 is rotatably supported by a supporting bracket 102. The supporting bracket 102 has a mounting frame 103 and a pair of top and bottom support arms 104 and 105 extending horizontally forward from top and bottom sections of the mounting frame 103. Bearings 106 and 107 are mounted horizontally on distal end sections of these support arms 104 and 105, and the perpendicular joint axle 101 is rotatably supported via these bearings 106 and 107. In the mounting frame 103 of the supporting bracket 102, first and second circular mounts 103A and 103B are formed at the top and bottom thereof (in a direction of a centerline 101A of the perpendicular joint axle 101). A front end section of a first actuator 110 is inserted, connected, and fixed in place in the upper first mount 103A from a rear side. A front end section of a second actuator 120 is inserted, connected, and fixed in place in the lower second mount 103B from a rear side.

A revolving bracket 130 positioned on a front side of the perpendicular joint axle 101 is connected and fixed in place thereon. The revolving bracket 130 has a connecting arm 131 and a pair of mounting arms 132 and 133 that are bifurcated vertically to extend forward parallel to each other from a front end of the connecting arm 131. The connecting arm 131 is connected and fixed in place at a vertical center section of the perpendicular joint axle 101. Therefore, the revolving bracket 130 revolves to the left and right integrally with the rotation of the perpendicular joint axle 101 around the centerline 101A thereof.

The first and second actuators 110 and 120 are mounted in the supporting bracket 102 so that axis lines 110A and 120A thereof face backward from the centerline 101A of the perpendicular joint axle 101 and extend in an orthogonal direction (horizontal direction). The first actuator 110 has a coaxially connected motor 111 and a reduction gear 112, a reducing rotational output axle 113 of the reduction gear 112 protrudes forward from the first mount 103A of the supporting bracket 102, and a first drive bevel gear 114 is coaxially connected and fixed in place on a distal end thereof. The second actuator 120 has the same configuration, which has a coaxially connected motor 121 and a reduction gear 122, wherein a reducing rotational output axle 123 of the reduction gear 122 protrudes forward from the second mount 103B of the supporting bracket 102, and a second drive bevel gear 124 is coaxially connected and fixed in place on a distal end thereof.

A first driven bevel gear 141 and a second driven bevel gear 142 are fixedly mounted in coaxial manner at locations inside of the top and bottom bearings 106 and 107 in the perpendicular joint axle 101. The first driven bevel gear 141 meshes with the first drive bevel gear 114, and the second driven bevel gear 142 meshes with the second drive bevel gear 124.

In the joint mechanism 100 with this configuration, the supporting bracket 102 is fixed in place, and when the first and second actuators 110 and 120 are rotatably driven in this state, the perpendicular joint axle 101 can be rotatably driven by the both actuators 110 and 120. When the perpendicular joint axle 101 rotates, the revolving bracket 130 connected and fixed thereto revolves to the left and right from a neutral position of the diagram.

The joint mechanism 100 of the present example can be applied, for example, to the fingertip joint part 8 in the finger unit 1 of a robot hand shown in FIGS. 3 and 4. In this case, the two actuators 110 and 120 are mounted in the finger base part 7, and the fingertip part 9 is revolved by these two actuators 110 and 120. It is thereby possible to revolve the fingertip part 9 with essentially two times the drive torque as when the fingertip part 9 is revolved by a single actuator as shown in FIGS. 3 and 4. Also, the horizontal dimensions of the joint axle do not increase even though the dimensions of the joint mechanism in the vertical direction of the joint axle do increase. Therefore, the joint mechanism of the present example can be employed in order to increase the drive torque of the joint axle when there is no extra installation space in the horizontal direction. Furthermore, since two actuators are provided, it is possible to design the configuration such that the drive of the fingertip part 9 can be ensured by the other actuator when one of the actuators 110 and 120 fails.

In the example described above, two actuators were provided, but the joint mechanism of the present invention can also be used when three or more actuators are provided. It is also apparent that the joint mechanism of the present invention can be used in a device other than an articulated finger unit with the structure shown in FIGS. 3 and 4.

## Claims

1. A joint mechanism (100) for a robot hand and the like, comprising:
a joint axle (101);
a supporting member (102) for rotatably supporting the joint axle (101) around a centerline (101A) thereof;
a revolving member (130) connected to the joint axle (101) and allowed to revolve around the centerline (101A) along with the rotation of the joint axle (101);
at least a first and second actuators (110, 120) mounted on the supporting member (102);
at least a first and second driven bevel gears (141, 142) fixedly mounted on the joint axle (101) in coaxial manner;
a first drive bevel gear (114) that is coaxially connected to a rotational output axle of the first actuator (110) and that meshes with the first driven bevel gear (141); and
a second drive bevel gear (124) that is coaxially connected to a rotational output axle of the second actuator (120) and that meshes with the second driven bevel gear (142); wherein
the first and second actuators (110, 120) are disposed in parallel along the centerline (101A) of the joint axle (101).

2. The joint mechanism for a robot hand and the like according to claim 1, wherein
the supporting member (102) comprises a mounting frame (103) for mounting the first and second actuators (110, 120), and a pair of support arms (104, 105) extending parallel to each other from both ends of the mounting frame; wherein
distal ends of the support arms (104, 105) rotatably support both end sections of the joint axle (101) via bearings (106, 107);
the first and second driven bevel gears (141, 142) are fixedly mounted at locations inside of the bearings (106, 107) in the joint axle (101), respectively; and
the revolving member (130) comprises a connecting arm (131) connected to a center section of the joint axle (101) between the bearings (106, 107) in the joint axle (101).

## Patentansprüche

1. Gelenkmechanismus (100) für eine Roboterhand und dergleichen, aufweisend:
eine Gelenkachse (101);
ein Abstützelement (102) zum Abstützen der Gelenkachse (101) in drehbarer Weise um eine Mittenlinie (101A) von dieser;
ein Drehelement (130), das mit der Gelenkachse (101) verbunden ist und sich zusammen mit der Drehung der Gelenkachse (101) um die Mittenlinie (101A) drehen kann;
zumindest einen ersten und einen zweiten Aktuator (110, 120), die an dem Abstützelement (102) angebracht sind;
zumindest ein erstes und ein zweites angetriebenes Kegelrad (141, 142), die an der Gelenkachse (101) in feststehender, koaxialer Weise angebracht sind;
ein erstes Antriebskegelrad (114), das mit einer Drehausgangswelle des ersten Aktuators (110) koaxial verbunden ist und das mit dem ersten angetriebenen Kegelrad (141) kämmt; und
ein zweites Antriebskegelrad (124), das mit einer Drehausgangswelle des zweiten Aktuators (120) koaxial verbunden ist und das mit dem zweiten angetriebenen Kegelrad (142) kämmt;
wobei der erste und der zweite Aktuator (110, 120) parallel entlang der Mittenlinie (101A) der Gelenkachse (101) angeordnet sind.

2. Gelenkmechanismus für eine Roboterhand und dergleichen nach Anspruch 1,
wobei das Abstützelement (102) einen Befestigungsrahmen (103) zum Befestigen des ersten und des zweiten Aktuators (110, 120) sowie ein Paar Abstützarme (104, 105) aufweist, die sich parallel zueinander von beiden Enden des Befestigungsrahmens weg erstrecken;
wobei distale Enden der Abstützarme (104, 105) die beiden Endbereiche der Gelenkachse (101) über Lager (106, 107) drehbar abstützen;
wobei das erste und das zweite angetriebene Kegelrad (141, 142) jeweils an innenseitig von den Lagern (106, 107) der Gelenkachse (101) gelegenen Stellen fest angebracht sind; und
wobei das Drehelement (130) einen Verbindungsarm (131) aufweist, der mit einem zentralen Bereich der Gelenkachse (101) zwischen den Lagern (106, 107) der Gelenkachse (101) verbunden ist.

## Revendications

1. Mécanisme d'articulation (100) pour une main de robot et similaire, comprenant :
un axe d'articulation (101) ;
un élément de support (102) pour supporter de manière rotative l'axe d'articulation (101) autour d'une ligne médiane (101A) de celui-ci ;
un élément tournant (130) raccordé à l'axe d'articulation (101) et pouvant tourner autour de la ligne médiane (101A) conjointement avec la rotation de l'axe d'articulation (101) ;
au moins des premier et deuxième actionneurs (110, 120) montés sur l'élément de support (102) ;
au moins des premier et deuxième engrenages coniques entraînés (141, 142) montés de manière fixe sur l'axe d'articulation (101) de manière coaxiale ;
un premier engrenage conique entraînant (114) qui est raccordé de manière coaxiale à un axe de sortie en rotation du premier actionneur (110) et qui s'engrène avec le premier engrenage conique entraîné (141) ; et
un deuxième engrenage conique entraînant (124) qui est raccordé de manière coaxiale à un axe de sortie en rotation du deuxième actionneur (120) et qui s'engrène avec le deuxième engrenage conique entraîné (142) ; dans lequel
les premier et deuxième actionneurs (110, 120) sont disposés de manière parallèle le long de la ligne médiane (101A) de l'axe d'articulation (101).

2. Mécanisme d'articulation pour une main de robot et similaire selon la revendication 1, dans lequel
l'élément de support (102) comprend un cadre de montage (103) pour monter les premier et deuxième actionneurs (110, 120), et une paire de bras de support (104, 105) s'étendant parallèlement l'un à l'autre à partir des deux extrémités du cadre de montage ; dans lequel
les extrémités distales des bras de support (104, 105) supportent de manière rotative les deux sections d'extrémité de l'axe d'articulation (101) via des paliers (106, 107) ;
les premier et deuxième engrenages coniques entraînés (141, 142) sont montés respectivement de manière fixe en des emplacements à l'intérieur des paliers (106, 107) dans l'axe d'articulation (101) ; et
l'élément tournant (130) comprend un bras de raccordement (131) raccordé à une section centrale de l'axe d'articulation (101) entre les paliers (106, 107) dans l'axe d'articulation (101).
